(19) Europäisches Patentamt / European Patent Office / Office européen des brevets

(11) **EP 4 386 686 A1**

(12) **EUROPEAN PATENT APPLICATION**

(43) Date of publication:
**19.06.2024 Bulletin 2024/25**

(21) Application number: **23188181.4**

(22) Date of filing: **27.07.2023**

(51) International Patent Classification (IPC):
**G06T 17/30** $^{(2006.01)}$

(52) Cooperative Patent Classification (CPC):
**G06T 17/30;** G06T 2210/21

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022 CN 202211636052**

(71) Applicant: **Academy of Mathematics and System
Sciences,
Chinese Academy of Sciences
100190 Beijing (CN)**

(72) Inventor: **CHENG, Jinsan
Beijing, 100190 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR PROCESSING DATA TO FIND AN INTERSECTION BETWEEN RATIONAL PARAMETRIC SURFACES, DEVICE, AND MEDIUM**

(57) The present disclosure provides a method and apparatus for processing data to find an intersection between rational parametric surfaces, a device, and a medium. The method for processing data to find the intersection between rational parametric surfaces includes: determining four-dimensional parametric curve data (S101); decomposing the four-dimensional parametric curve data into a plurality of first strongly monotonic curve segment data (S102); decomposing each of the plurality of first strongly monotonic curve segment data into at least one second strongly monotonic curve segment data (S103); and determining a point distance between two adjacent points of each of the at least one second strongly monotonic curve segment data in a corresponding three-dimensional model space, so as to find the intersection between rational parametric surfaces (S104). By the decomposition based on strongly monotonic curve segment, it may be ensured there will be no problems of getting lost and cycling during a tracing process of the four-dimensional parametric curve, and a correct knot structure may be ensured, thereby maintaining a topological accuracy. In addition, an accuracy of finding the intersection may be controlled by controlling a distance between two adjacent points.

FIG. 1

**Description**

TECHNICAL FIELD

The present disclosure relates to a field of a computer technology, in particular to a method and apparatus for processing data to find an intersection between rational parametric surfaces, a device, and a medium.

BACKGROUND

Finding an intersection between rational parametric surfaces (that is, finding an intersection between rational surfaces) is a basic process for building and querying a complex CAD model. Finding the intersection between rational surfaces is important and commonly used in a representation of a complex object, a finite element discretization, a computer animation, a facial recognition, and other aspects. With an efficient, reliable, robust and accuracy-controllable method for finding an intersection, the intersection between rational surfaces may be better found to meet a relevant application of building and querying a complex CAD model. However, it is generally difficult to ensure a correctness of a topological property of an intersection line output by an existing CAD system, so that it is difficult to effectively achieve a higher accuracy of finding the intersection between rational surfaces.

SUMMARY

(1) Technical problems to be solved

In order to solve at least one of the technical problems existing in a related art regarding finding an intersection between rational surfaces, the present disclosure provides a method and apparatus for processing data to find an intersection between rational parametric surfaces, a device, and a medium.

(2) Technical solutions

In an aspect of the present disclosure, a method for processing data to find an intersection between rational parametric surfaces is provided, including: determining four-dimensional parametric curve data; decomposing the four-dimensional parametric curve data into a plurality of first strongly monotonic curve segment data; decomposing each of the plurality of first strongly monotonic curve segment data into at least one second strongly monotonic curve segment data; and determining a point distance between two adjacent points of each of the at least one second strongly monotonic curve segment data in a corresponding three-dimensional model space, so as to find the intersection between rational parametric surfaces.

According to embodiments of the present disclosure, the determining four-dimensional parametric curve data includes: determining the four-dimensional parametric curve data based on received first rational parametric surface data and second rational parametric surface data.

According to embodiments of the present disclosure, the method further includes: before decomposing the four-dimensional parametric curve data into a plurality of first strongly monotonic curve segment data, determining four-dimensional tangent vector data and three-dimensional tangent vector data, where the four-dimensional tangent vector data corresponds to the four-dimensional parametric curve data, and the three-dimensional tangent vector data corresponds to three-dimensional parametric curve data formed by mapping the four-dimensional parametric curve data into the three-dimensional model space.

According to embodiments of the present disclosure, the decomposing the four-dimensional parametric curve data into a plurality of first strongly monotonic curve segment data includes: tracing the four-dimensional parametric curve data from a predetermined starting point corresponding to the four-dimensional parametric curve data, and in response to a decomposed curve segment meeting a predetermined first lemma condition, determining the decomposed curve segment as one of the plurality of first strongly monotonic curve segment data, where the decomposed curve segment corresponds to an ending point meeting a first predetermined step length with the predetermined starting point.

According to embodiments of the present disclosure, the decomposing the four-dimensional parametric curve data into a plurality of first strongly monotonic curve segment data further includes: tracing the four-dimensional parametric curve data from a predetermined starting point corresponding to the four-dimensional parametric curve data, and in response to a decomposed curve segment meeting a first predetermined cycle condition, determining a critical point of the decomposed curve segment, where the decomposed curve segment corresponds to an ending point meeting a first predetermined step length with the predetermined starting point; and determining, in response to a first decomposed curve segment and a second decomposed curve segment meeting a second lemma condition, the first decomposed curve segment and the second decomposed curve segment as two of the plurality of first strongly monotonic curve segment data, and continuing to trace the four-dimensional parametric curve data by using the ending point of the decomposed curve segment as a starting point, where the first decomposed curve segment corresponds to the predetermined starting point of the decomposed curve segment and the critical point, and the second decomposed curve segment corresponds to the critical point and the ending point of the decomposed curve segment, and where the first lemma condition and the second lemma condition are related to four-dimensional tangent vector data corresponding to the four-dimensional parametric curve.

According to embodiments of the present disclosure, the decomposing the four-dimensional parametric curve data into a plurality of first strongly monotonic curve segment data further includes: re-tracing the four-dimensional parametric curve data with a second predetermined step length from the predetermined starting point, in response to the first decomposed curve segment and the second decomposed curve segment not meeting the second lemma condition or in response to failing to determine the critical point, where the second predetermined step length is half of the first predetermined step length.

According to embodiments of the present disclosure, the decomposing each of the plurality of first strongly monotonic curve segment data into at least one second strongly monotonic curve segment data includes: decomposing, according to a third lemma condition, each of the plurality of first strongly monotonic curve segment data into at least one second strongly monotonic curve segment data in a corresponding three-dimensional model space, where the third lemma condition is related to three-dimensional tangent vector data corresponding to three-dimensional parametric curve data in a three-dimensional model space corresponding to the four-dimensional parametric curve.

In another aspect of the present disclosure, an apparatus for processing data to find an intersection between rational parametric surfaces is provided, including: a curve determination module configured to determine four-dimensional parametric curve data; a first decomposition module configured to decompose the four-dimensional parametric curve data into a plurality of first strongly monotonic curve segment data; a second decomposition module configured to decompose each of the plurality of first strongly monotonic curve segment data into at least one second strongly monotonic curve segment data; and a distance determination module configured to determine a point distance between two adjacent points of each of the at least one second strongly monotonic curve segment data in a corresponding three-dimensional model space, so as to find the intersection between rational parametric surfaces.

In another aspect of the present disclosure, an electronic device is provided, including: one or more processors; and a memory for storing one or more programs, where the one or more programs, when executed by the one or more processors, are configured to cause the one or more processors to implement the method in embodiments of the present disclosure.

In another aspect of the present disclosure, a computer-readable storage medium having computer-executable instructions is provided, and the instructions when executed, are configured to implement the method in embodiments of the present disclosure.

In another aspect of the present disclosure, a computer program containing computer-executable instructions is provided, and the instructions when executed, are configured to implement the method in embodiments of the present disclosure.

(3) Beneficial effects

The present disclosure provides a method and apparatus for processing data to find an intersection between rational parametric surfaces, a device, and a medium. The method for processing data to find the intersection between rational parametric surfaces includes: determining four-dimensional parametric curve data; decomposing the four-dimensional parametric curve data into a plurality of first strongly monotonic curve segment data; decomposing each of the plurality of first strongly monotonic curve segment data into at least one second strongly monotonic curve segment data; and determining a point distance between two adjacent points of each of the at least one second strongly monotonic curve segment data in a corresponding three-dimensional model space, so as to find the intersection between rational parametric surfaces. By decomposing a four-dimensional parametric curve corresponding to a four-dimensional parameter space, it is possible to obtain first strongly monotonic curve segments with a strong monotonicity, thereby ensuring there will be no problems of getting lost and cycling during a tracing process of the four-dimensional parametric curve. By further decomposing the first strongly monotonic curve segment into the second strongly monotonic curve segment, it is possible to further ensure there will be no problems of getting lost and cycling in a three-dimensional model space, and ensure a correct knot structure, thereby maintaining a topological accuracy. Finally, an accuracy of finding the intersection may be controlled by controlling a distance between two adjacent points.

BRIEF DESCRIPTION OF THE DRAWINGS

For a more complete understanding of the present disclosure and its advantages, reference will now be made to the following description in conjunction with the accompanying drawings, in which:

FIG. 1 schematically shows a flowchart of a method for processing data to find an intersection between rational parametric surfaces according to embodiments of the present disclosure;

FIG. 2A schematically shows a form of a strongly monotonic curve segment PQ according to embodiments of the present disclosure;

FIG. 2B schematically shows another form of a strongly monotonic curve segment PQ according to embodiments of the present disclosure;

FIG. 3 schematically shows a mapping of a four-dimensional parametric curve segment $P_0P_7$ with boxes to form a three-dimensional parametric curve segment $C(P_0)C(P_7)$ in a three-dimensional model space according to embodiments of the present disclosure;

FIG. 4A schematically shows a representation (non-intersection) of a knot structure in a three-dimensional model space according to embodiments of the present disclosure;

FIG. 4B schematically shows another representation (intersection) of a knot structure in a three-dimensional model space according to embodiments of the present disclosure;

FIG. 5A schematically shows a diagram of thickening a box corresponding to the PQ curve segment in the four-dimensional parametric curve according to embodiments of the present disclosure;

FIG. 5B schematically shows a decomposition of the PQ curve segment in the four-dimensional parametric curve to form two strongly monotonic curve segments PC and CQ based on a critical point C according to embodiments of the present disclosure;

FIG. 6 schematically shows a mapping of a four-dimensional parametric curve segment PQ with boxes to form a three-dimensional parametric curve segment C(P)C(Q) in a three-dimensional model space according to embodiments of the present disclosure;

FIG. 7A schematically shows a diagram of a distance control accuracy according to embodiments of the present disclosure;

FIG. 7B schematically shows an error control of the strongly monotonic curve segment C(P)C(Q) corresponding to FIG. 7A in the three-dimensional model space according to embodiments of the present disclosure;

FIG. 8A to FIG. 8C schematically show distributions of rational parametric surfaces respectively corresponding to a first embodiment to a third embodiment of the present disclosure in the three-dimensional model space;

FIG. 9 schematically shows a block diagram of an apparatus for processing data to find an intersection between rational parametric surfaces according to embodiments of the present disclosure; and

FIG. 10 schematically shows a block diagram of an electronic device according to embodiments of the present disclosure.

## DETAILED DESCRIPTION OF EMBODIMENTS

Embodiments of the present disclosure will be described below with reference to the accompanying drawings. It should be understood, however, that these descriptions are merely exemplary and are not intended to limit the scope of the present disclosure. In the following detailed descriptions, for ease of interpretation, many specific details are set forth to provide a comprehensive understanding of embodiments of the present disclosure. However, it is clearly that one or more embodiments may also be implemented without these specific details. In addition, in the following descriptions, descriptions of well-known structures and technologies are omitted to avoid unnecessarily obscuring concepts of the present disclosure.

Terms used herein are for the purpose of describing specific embodiments only and are not intended to limit the present disclosure. The terms "comprise", "include", "contain", etc. used herein indicate the presence of the feature, step, operation and/or component, but do not exclude the presence or addition of one or more other features, steps, operations or components.

All terms (including technical and scientific terms) used herein have meanings generally understood by those skilled in the art, unless otherwise defined. It should be noted that the terms used herein should be interpreted to have meanings consistent with the context of this specification, and should not be interpreted in an idealized or too rigid way.

In a case of using an expression similar to "at least one selected from A, B, and C", it should generally be interpreted in accordance with the meaning of the expression generally understood by those skilled in the art (for example, "a system including at least one selected from A, B, and C" should include but not be limited to, a system having A alone, a system having B alone, a system having C alone, a system having A and B, a system having A and C, a system having B and C, and/or a system having A, B and C, etc.).

Some block diagrams and/or flowcharts are shown in the accompanying drawings. It should be understood that some blocks in the block diagrams and/or flowcharts or combinations thereof may be implemented by computer program instructions. These computer program instructions may be provided to a processor of a general-purpose computer, a special-purpose computer, or other programmable data processing apparatuses, so that these instructions, when executed by the processor, may create means for implementing the functions/operations described in these block diagrams and/or flowcharts. The technology of the present disclosure may be implemented in a form of hardware and/or software (including firmware, microcode, etc.). In addition, the technology of the present disclosure may take a form of a computer program product on a computer-readable storage medium having instructions therein, and the computer program product may be used by an instruction execution system or used in combination with the instruction execution system.

Various solutions in the related art, such as a mesh method, a stepwise method, a subdivision and exclusion method, and a scanning method, may be implemented to find an intersection between parametric surfaces. However, those methods have significant problems in practical applications. For example, the stepwise method is generally popular because a pre-allocation of storage space is not required and an error may be easily controlled. However, during a process of the stepwise method, there may be problems of branch jumping (from one branch to another branch) and tracing cycle (tracing is limited to an ellipse not matched with a true curve), where the former may cause an incorrect topological property of a traced curve, and the latter may cause an algorithm to not terminate.

In addition, it is rarely mentioned in existing work that a knot structure of a curve may cause an incorrect topological property during tracing. When tracing a curve, a starting point on an intersection line is needed. The starting point is generally a boundary point, a point near a singular point, or a critical point.

Considering a regularity of a curve segment in a box, it is possible to check for uniqueness and no cycling by using a normal cone. One method is to transform, by using an arc length parameter in $\mathbb{R}^3$, an intersection problem into an initial value problem for solving an ODE equation, and then solve the jumping and cycling error by using Taylor series. Such method has advantages that the singular point may be distinguished from very close curve segments, so it is very suitable for some complex surface intersections. However, such method may be very time-consuming to obtain a high-accuracy approximation, and it is not practical in a case of a simple intersection line and a low accuracy requirement. Another method is to trace the parametric curve by solving an algebraic equation, in which a subdivision technology and an interval algorithm are combined to find all roots exhaustively and robustly, but a topological solution of adjacent information of roots is complex. In addition, in a case of tangential intersection and higher-order intersection, such algorithm is often very time-consuming and may not ensure that a generated interval necessarily contains a root. This is an inherent problem related to any subdivision algorithm. Although there is an improved method (that is, calculating a number of intersection points between a box boundary and the curve to ensure that there is a unique curve segment inside the box), such operation is also very time-consuming in a case of a high accuracy. Certainly, it is also possible to find all critical points of the parametric curve through equations, and then decompose the parametric curve into strongly monotonic curve segments. However, it is difficult to find real roots of a four-variable equation set with an arbitrary error accuracy, and the problem of knot is not considered.

When finding the intersection between rational surfaces, it is very important to ensure the accuracy control in practice, but it is still very difficult to achieve this function. The method combining the interval method and the subdivision method may be used to control the error, but it is impractical in the case of high-accuracy approximation. An improved method is to directly assume that the critical point in a parameter space and the critical point in a model space are known, and construct Bezier curve segments by using some points on the curve. Controlling a step length during a curve tracing process is also a commonly used accuracy control method, but its correctness may not be determined yet. An ODE-based method may also obtain an ensured error control method.

In order to solve at least one of the technical problems existing in the related art regarding finding the intersection between rational surfaces, the present disclosure provides a method and apparatus for processing data to find an intersection between rational parametric surfaces, a device, and a medium.

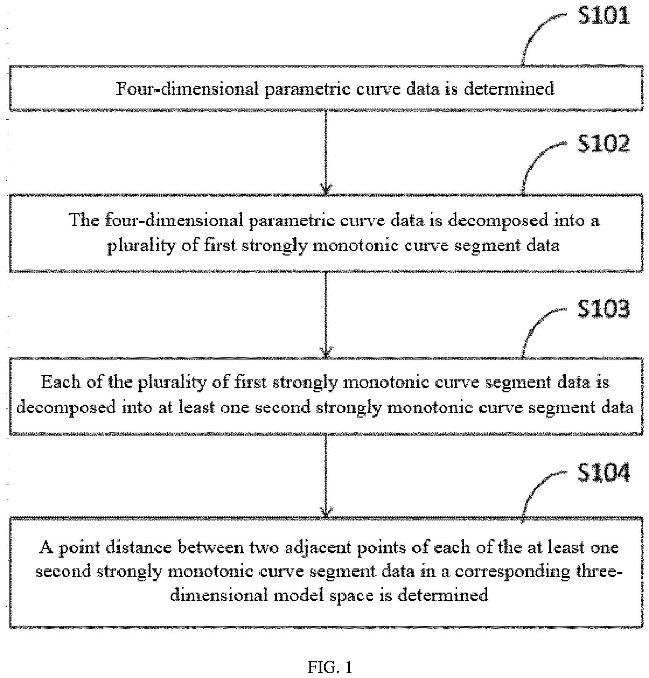

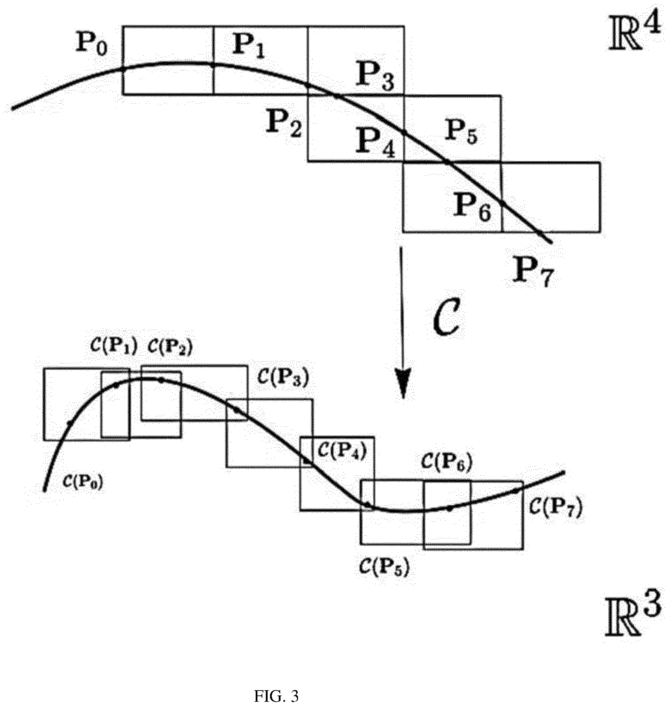

A method for processing data to find an intersection between rational parametric surfaces, an apparatus for processing data to find an intersection between rational parametric surfaces, an electronic device, and a computer-readable storage medium provided in embodiments of the present disclosure will be further described below in detail with reference to FIG. 1 to FIG. 10.

As shown in FIG. 1, in an aspect of the present disclosure, a method for processing data to find an intersection between rational parametric surfaces is provided, which includes steps S101 to S104.

In step S101, four-dimensional parametric curve data is determined.

In step S102, the four-dimensional parametric curve data is decomposed into a plurality of first strongly monotonic curve segment data.

In step S103, each of the plurality of first strongly monotonic curve segment data is decomposed into at least one second strongly monotonic curve segment data.

In step S104, a point distance between two adjacent points of each of the at least one second strongly monotonic curve segment data in a corresponding three-dimensional model space is determined, so as to find the intersection between rational parametric surfaces.

The four-dimensional parametric curve data is a data content related to a parametric curve in a four-dimensional parameter space formed according to input data corresponding to the rational parametric surfaces. The input data corresponds to at least two rational parametric surfaces, that is, at least two rational parametric surfaces need to be used as the input data to find the intersection of the rational parametric surface.

By decomposing the above-mentioned four-dimensional parametric curve data in the four-dimensional parameter space, it is possible to obtain a plurality of different curve segments corresponding to the four-dimensional parametric curve. Each curve segment in those curve segments needs to meet a corresponding strongly monotonic characteristic, so that it may be used as the first strongly monotonic curve segment, which may be used to form the above-mentioned first strongly monotonic curve segment data. The so-called strongly monotonic characteristic refers to that for a specific component of a tangent vector at each point on the curve segment, a symbol does not change on the curve segment. Therefore, by decomposing the four-dimensional parametric curve corresponding to the four-dimensional parameter space, it is possible to obtain the first strongly monotonic curve segment with strong monotonicity, so that it may be ensured that there will be no problems of getting lost or cycling during the tracing process of the four-dimensional parametric curve.

Furthermore, each first strongly monotonic curve segment obtained by decomposing the four-dimensional parametric curve data may be decomposed into a plurality of second strongly monotonic curve segments. The second strongly monotonic curve segment may be one of a plurality of curve sub-segments corresponding to the first strongly monotonic curve segment of the four-dimensional parametric curve, and also meet the corresponding strong monotonicity. The second strongly monotonic curve segment may also meet a strong monotonicity in a corresponding three-dimensional model space. Therefore, by further decomposing the first strongly monotonic curve segment into the second strongly monotonic curve segments, it may be further ensured that there will be no problems of getting lost or cycling in the three-dimensional model space, and a correct knot structure may be ensured, so that a topological accuracy may be maintained.

Finally, the plurality of second strongly monotonic curve segments may be used to determine a point distance between two points corresponding to two adjacent points on each second strongly monotonic curve segment in the corresponding three-dimensional model space and determine a relationship between the point distance and an error size of a predetermined distance, which may be used to find the intersection between rational parametric surfaces. Specifically, each second strongly monotonic curve segment meeting the strong monotonicity in the four-dimensional parameter space may be decomposed into two adjacent points P and Q, and a distance between two points corresponding to the points P and Q in the corresponding three-dimensional model space is less than $2\xi$, where $\xi$ is a predetermined intersection error. Therefore, the error accuracy of finding the intersection between rational parametric surfaces may be controlled by using a distance limit between two adjacent points on each decomposed second strongly monotonic curve segment.

Therefore, by decomposing the four-dimensional parametric curve corresponding to the four-dimensional parameter space, the first strongly monotonic curve segment with strong monotonicity may be obtained, so that it may be ensured there will be no problems of getting lost and cycling during the tracing process of the four-dimensional parametric curve. Furthermore, by further decomposing the first strongly monotonic curve segment into the second strongly monotonic curve segment, it may be further ensured that there will be no problems of getting lost and cycling in the three-dimensional model space, and the correct knot structure may be ensured, so that the topological accuracy may be maintained. Finally, the accuracy of finding the intersection may be controlled by controlling the distance between two adjacent points.

As shown in FIG. 1, according to embodiments of the present disclosure, the step S101 of determining the four-dimensional parametric curve data may include:

the four-dimensional parametric curve data is determined based on received first rational parametric surface data and second rational parametric surface data.

In embodiments of the present disclosure, it is required to firstly determine the corresponding four-dimensional parametric curve in the four-dimensional parameter space. The input data in embodiments of the present disclosure may be data of two intersecting rational parametric surfaces, including first rational parametric surface data and second rational parametric surface data. The input is first rational parametric surface data $R_1(s, t)$ and second rational parametric surface data $R_2(u, v)$, which respectively meet equations as follows:

$$R_1(s, t) = \left( \frac{F_1(s, t)}{F_4(s, t)}, \frac{F_2(s, t)}{F_4(s, t)}, \frac{F_3(s, t)}{F_4(s, t)} \right)$$

$$R_2(u, v) = \left( \frac{G_1(u, v)}{G_4(u, v)}, \frac{G_2(u, v)}{G_4(u, v)}, \frac{G_3(u, v)}{G_4(u, v)} \right)$$

where $(s, t) \in \mathbb{R}^2$, $(u, v) \in \mathbb{R}^2$, s, t, u, v are independent parameter variables, $F_1(s,t)$ to $F_4(s, t)$ are different binary polynomials, and $G_1(u, v)$ to $G_4(u, v)$ are different binary polynomials.

Therefore, a four-dimensional parametric curve $W$ in the four-dimensional parameter space in embodiments of the present disclosure may be defined as follows:

$$W = \left( \frac{F_1(s, t)}{F_4(s, t)} - \frac{G_1(u, v)}{G_4(u, v)}, \frac{F_2(s, t)}{F_4(s, t)} - \frac{G_2(u, v)}{G_4(u, v)}, \frac{F_3(s, t)}{F_4(s, t)} - \frac{G_3(u, v)}{G_4(u, v)} \right)$$

where $W$ represents a curve in the four-dimensional parameter space in embodiments of the present disclosure, that is, the four-dimensional parametric curve $W$. Those skilled in the art should understand that the four-dimensional parametric curve $W$ is a curve formed by mapping an intersection line of the first rational parametric surface and the second rational parametric surface in the three-dimensional model space into the four-dimensional parameter space. In addition, those skilled in the art should understand that the four-dimensional parameter space is a four-dimensional space of (s, t, u, v), and the three-dimensional model space is a three-dimensional space of (x, y, z), which will not be described in detail here.

As shown in FIG. 1, according to embodiments of the present disclosure, before the step S 102 of decomposing the four-dimensional parametric curve data into a plurality of first strongly monotonic curve segment data, the method may further include:

four-dimensional tangent vector data corresponding to the four-dimensional parametric curve data and three-dimensional tangent vector data corresponding to three-dimensional parametric curve data formed by mapping the four-dimensional parametric curve data into the three-dimensional model space are determined.

As mentioned above, a determination of a strong monotonicity of a curve segment is related to a tangent vector of the corresponding curve segment in a space that the curve segment belongs to. A corresponding description is given below for the four-dimensional parametric curve $W$.

An intersection curve between the first rational parametric surface $R_1(s, t)$ and the second rational parametric surface $R_2(u, v)$ in the three-dimensional model space is defined as a three-dimensional parametric curve $\mathcal{C}$. The three-dimensional parametric curve $\mathcal{C}$ may be regarded as a curve formed by mapping the four-dimensional parametric curve $W$ into the three-dimensional model space, and the three-dimensional parametric curve $\mathcal{C}$ may be mapped as follows:

$$\mathcal{C} = \left\{ \left( \frac{F_1(s, t)}{F_4(s, t)}, \frac{F_2(s, t)}{F_4(s, t)}, \frac{F_3(s, t)}{F_4(s, t)} \right) \middle| (s, t) \in \pi_1 \big( V(W) \big) \right\}$$

or

$$C = \left\{ \frac{G_1(u,v)}{G_4(u,v)}, \frac{G_2(u,v)}{G_4(u,v)}, \frac{G_3(u,v)}{G_4(u,v)} \,\middle|\, (u,v) \in \pi_2\big(V(W)\big) \right\}$$

where $\pi_1 := (s, t, u, v) \rightarrow (s, t)$, $\pi_2 := (s, t, u, v) \rightarrow (u, v)$, $V(W)$ represents a point set of the four-dimensional parametric curve $W$ in the four-dimensional parameter space, and the point set $V(W)$ may be replaced by the four-dimensional parametric curve $W$.

In a subsequent tracing process for the curve, the tangent vector of the curve is needed to determine the strong monotonicity of the curve. Therefore, the tangent vector of the four-dimensional parametric curve $W$ (i.e., the four-dimensional tangent vector data) and the tangent vector of the three-dimensional parametric curve $C$ (i.e., the three-dimensional tangent vector data) are given as follows.

To determine the four-dimensional tangent vector data of the four-dimensional parametric curve $W$, a Jacobian matrix $M_W$ of the four-dimensional parametric curve $W$ is determine as follows:

$$M_W = \begin{pmatrix} \dfrac{\partial \frac{F_1(s,t)}{F_4(s,t)}}{\partial s} & \dfrac{\partial \frac{F_1(s,t)}{F_4(s,t)}}{\partial t} & -\dfrac{\partial \frac{G_1(u,v)}{G_4(u,v)}}{\partial u} & -\dfrac{\partial \frac{G_1(u,v)}{G_4(u,v)}}{\partial v} \\[2em] \dfrac{\partial \frac{F_2(s,t)}{F_4(s,t)}}{\partial s} & \dfrac{\partial \frac{F_2(s,t)}{F_4(s,t)}}{\partial t} & -\dfrac{\partial \frac{G_2(u,v)}{G_4(u,v)}}{\partial u} & -\dfrac{\partial \frac{G_2(u,v)}{G_4(u,v)}}{\partial v} \\[2em] \dfrac{\partial \frac{F_3(s,t)}{F_4(s,t)}}{\partial s} & \dfrac{\partial \frac{F_3(s,t)}{F_4(s,t)}}{\partial t} & -\dfrac{\partial \frac{G_3(u,v)}{G_4(u,v)}}{\partial u} & -\dfrac{\partial \frac{G_3(u,v)}{G_4(u,v)}}{\partial v} \end{pmatrix}$$

Therefore, the four-dimensional tangent vector $\Gamma_W$ of the four-dimensional parametric curve $W$ at point p is as follows, where $p \in V(W)$:

$$\Gamma_W = \big(W_1(\mathrm{p}), -W_2(\mathrm{p}), W_3(\mathrm{p}), -W_4(\mathrm{p})\big)$$

where $W_i(\mathrm{p})$ is a determinant corresponding to point p of the Jacobian matrix $M_W$ of the four-dimensional parametric curve $W$ after a removal of column $i$.

To determine the three-dimensional tangent vector data of the three-dimensional parametric curve $C$, a corresponding seven-dimensional curve is further introduced. Since (x, y, z) are parameter variables in the three-dimensional model space, and considering that all variables (s, t, u, v, x, y, z) are in the seven-dimensional space, the three-dimensional parametric curve $C$ may be regarded as a projection of a seven-dimensional parametric curve from the seven-dimensional parameter space to the three-dimensional model space. A seven-dimensional parametric curve $T$ in the seven-dimensional parameter space is defined as follows:

$$T = \Big( \frac{F_1(s,t)}{F_4(s,t)} - \frac{G_1(u,v)}{G_4(u,v)}, \frac{F_2(s,t)}{F_4(s,t)} - \frac{G_2(u,v)}{G_4(u,v)}, \frac{F_3(s,t)}{F_4(s,t)} - \frac{G_3(u,v)}{G_4(u,v)}, x - \frac{F_1(s,t)}{F_4(s,t)}, y$$

$$- \frac{F_2(s,t)}{F_4(s,t)}, z - \frac{F_3(s,t)}{F_4(s,t)} \Big)$$

Furthermore, the Jacobian matrix of the seven-dimensional parametric curve $T$ is shown as follows:

$$M_T = \begin{pmatrix} \partial\dfrac{\frac{F_1(s,t)}{F_4(s,t)}}{\partial s} & \partial\dfrac{\frac{F_1(s,t)}{F_4(s,t)}}{\partial t} & -\partial\dfrac{\frac{G_1(u,v)}{G_4(u,v)}}{\partial u} & -\partial\dfrac{\frac{G_1(u,v)}{G_4(u,v)}}{\partial v} & 0 & 0 & 0 \\[4pt] \partial\dfrac{\frac{F_2(s,t)}{F_4(s,t)}}{\partial s} & \partial\dfrac{\frac{F_2(s,t)}{F_4(s,t)}}{\partial t} & -\partial\dfrac{\frac{G_2(u,v)}{G_4(u,v)}}{\partial u} & -\partial\dfrac{\frac{G_2(u,v)}{G_4(u,v)}}{\partial v} & 0 & 0 & 0 \\[4pt] \partial\dfrac{\frac{F_3(s,t)}{F_4(s,t)}}{\partial s} & \partial\dfrac{\frac{F_3(s,t)}{F_4(s,t)}}{\partial t} & -\partial\dfrac{\frac{G_3(u,v)}{G_4(u,v)}}{\partial u} & -\partial\dfrac{\frac{G_3(u,v)}{G_4(u,v)}}{\partial v} & 0 & 0 & 0 \\[4pt] -\partial\dfrac{\frac{F_1(s,t)}{F_4(s,t)}}{\partial s} & -\partial\dfrac{\frac{F_1(s,t)}{F_4(s,t)}}{\partial t} & 0 & 0 & 1 & 0 & 0 \\[4pt] -\partial\dfrac{\frac{F_2(s,t)}{F_4(s,t)}}{\partial s} & -\partial\dfrac{\frac{F_2(s,t)}{F_4(s,t)}}{\partial t} & 0 & 0 & 0 & 1 & 0 \\[4pt] -\partial\dfrac{\frac{F_3(s,t)}{F_4(s,t)}}{\partial s} & -\partial\dfrac{\frac{F_3(s,t)}{F_4(s,t)}}{\partial t} & 0 & 0 & 0 & 0 & 1 \end{pmatrix}$$

As the seven-dimensional parametric curve $T$ defines a curve in the seven-dimensional parameter space, a tangent vector $\Gamma_T$ of the seven-dimensional parametric curve T at a point p' = (p, C(p))(p C V(W)) is as follows:

$$\Gamma_T = (T_1(p'), T_2(p'), T_3(p'), T_4(p'), T_5(p'), T_6(p'), T_7(p'))$$

where $T_i(p')$ is a determinant corresponding to point p' of the Jacobian matrix $M_T$ of the seven-dimensional parametric curve $T$ after a removal of column $i$.

As the four-dimensional parametric curve $W$ is obtained by mapping the seven-dimensional parametric curve into the four-dimensional (s, t, u, v) space and the three-dimensional parametric curve $\mathcal{C}$ is obtained by mapping the seven-dimensional parametric curve into the three-dimensional (x, y, z) space, the tangent vectors of the four-dimensional parametric curve W and the three-dimensional parametric curve $\mathcal{C}$ at points p and $\mathcal{C}(p)$ are respectively as follows:

$$\Gamma_W = \left(T_1(p'), T_2(p'), T_3(p'), T_4(p')\right) = \left(W_1(p), -W_2(p), W_3(p), -W_4(p)\right)$$

$$\Gamma_{\mathcal{C}} = \left(T_5(p'), T_6(p'), T_7(p')\right)$$

Further, it is determined that the tangent vector of the three-dimensional parametric curve $\mathcal{C}$ at $\mathcal{C}(p)$ meets the following:

$$\Gamma_C(\mathrm{p}) = \left( \frac{\partial \frac{F_1(s,t)}{F_4(s,t)}}{\partial s} W_1 - \frac{\partial \frac{F_1(s,t)}{F_4(s,t)}}{\partial t} W_2, \frac{\partial \frac{F_2(s,t)}{F_4(s,t)}}{\partial s} W_1 - \frac{\partial \frac{F_2(s,t)}{F_4(s,t)}}{\partial t} W_2, \frac{\partial \frac{F_3(s,t)}{F_4(s,t)}}{\partial s} W_1 \right.$$

$$\left. - \frac{\partial \frac{F_3(s,t)}{F_4(s,t)}}{\partial t} W_2 \right) \Big|_{(s,t,u,v)=p}$$

or

$$\Gamma_C(\mathrm{p}) = \left( \frac{\partial \frac{G_1(u,v)}{G_4(u,v)}}{\partial u} W_1 - \frac{\partial \frac{G_1(u,v)}{G_4(u,v)}}{\partial v} W_2, \frac{\partial \frac{G_2(u,v)}{G_4(u,v)}}{\partial u} W_1 - \frac{\partial \frac{G_2(u,v)}{G_4(u,v)}}{\partial v} W_2, \frac{\partial \frac{G_3(u,v)}{G_4(u,v)}}{\partial u} W_1 \right.$$

$$\left. - \frac{\partial \frac{G_3(u,v)}{G_4(u,v)}}{\partial v} W_2 \right) \Big|_{(s,t,u,v)=p}$$

As shown in FIG. 1 to FIG. 5B, according to embodiments of the present disclosure, the step S102 of decomposing the four-dimensional parametric curve data into a plurality of first strongly monotonic curve segment data may include:

the four-dimensional parametric curve data is traced from a predetermined starting point corresponding to the four-dimensional parametric curve data, and in response to a decomposed curve segment, which corresponds to an ending point meeting a first predetermined step length with the predetermined starting point, meeting a predetermined first lemma condition, the decomposed curve segment is determined as one of the plurality of first strongly monotonic curve segment data.

As shown in FIG. 1 to FIG. 5B, according to embodiments of the present disclosure, the step S102 of decomposing the four-dimensional parametric curve data into a plurality of first strongly monotonic curve segment data may further include:

the four-dimensional parametric curve data is traced from a predetermined starting point corresponding to the four-dimensional parametric curve data, and when a decomposed curve segment, which corresponds to an ending point meeting the first predetermined step length with the predetermined starting point, meeting a first predetermined cycle condition, a critical point of the decomposed curve segment is determined.

When a first decomposed curve segment that corresponds to the predetermined starting point of the decomposed curve segment and the critical point and a second decomposed curve segment that corresponds to the critical point and the ending point of the decomposed curve segment meet a second lemma condition, the first decomposed curve segment and the second decomposed curve segment are determined as two of the plurality of first strongly monotonic curve segment data, and the four-dimensional parametric curve data continues to be traced by using the ending point of the decomposed curve segment as a starting point.

The first lemma condition and the second lemma condition are related to the four-dimensional tangent vector data corresponding to the four-dimensional parametric curve.

As shown in FIG. 1 to FIG. 5B, according to embodiments of the present disclosure, the step S102 of decomposing the four-dimensional parametric curve data into a plurality of first strongly monotonic curve segment data may further include:

when the first decomposed curve segment and the second decomposed curve segment do not meet the second lemma condition or it fails to determine the critical point, the four-dimensional parametric curve data is re-traced with a second predetermined step length from the predetermined starting point.

The second predetermined step length is half of the first predetermined step length.

The curve decomposition in embodiments of the present disclosure involves tracing from the starting point of a curve to the ending point of the curve. During the tracing process, the corresponding curve is decomposed into a plurality of curve segments, and each curve segment needs to meet the strong monotonicity.

A definition of the strong monotonicity involves the critical point of the curve, and a point p on the four-dimensional parametric curve $W$ (or the three-dimensional parametric curve $\mathcal{C}$ ) is the critical point. For some but not all $i$ in $i$ = 1,2,3,4 (or $i$ = 5,6,7), the corresponding seven-dimensional parametric curve corresponds to the tangent vector $T_i(p') = 0$ on point p'.

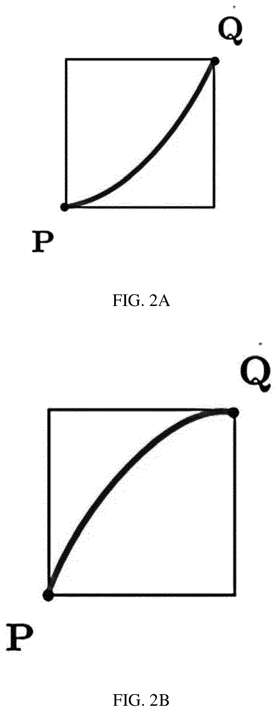

For a curve segment $\widehat{PQ}$ on the four-dimensional parametric curve $W$ (or the three-dimensional parametric curve $\mathcal{C}$ ), if a component $T_i$ ($i$ = 1,2,3,4 or 5,6,7) of the tangent vector on each four-dimensional parametric curve $W$ (or three-dimensional parametric curve $\mathcal{C}$ ) does not change the symbol on the curve segment (either positive or negative), the corresponding curve segment is strongly monotonic, that is, all points on the curve segment meet $T_i(p') \geq 0$ or $T_i(p') \leq 0$, as shown in FIG. 2A or FIG. 2B. Therefore, if a curve segment contains no critical point or only has one critical point, the curve segment is strongly monotonic.

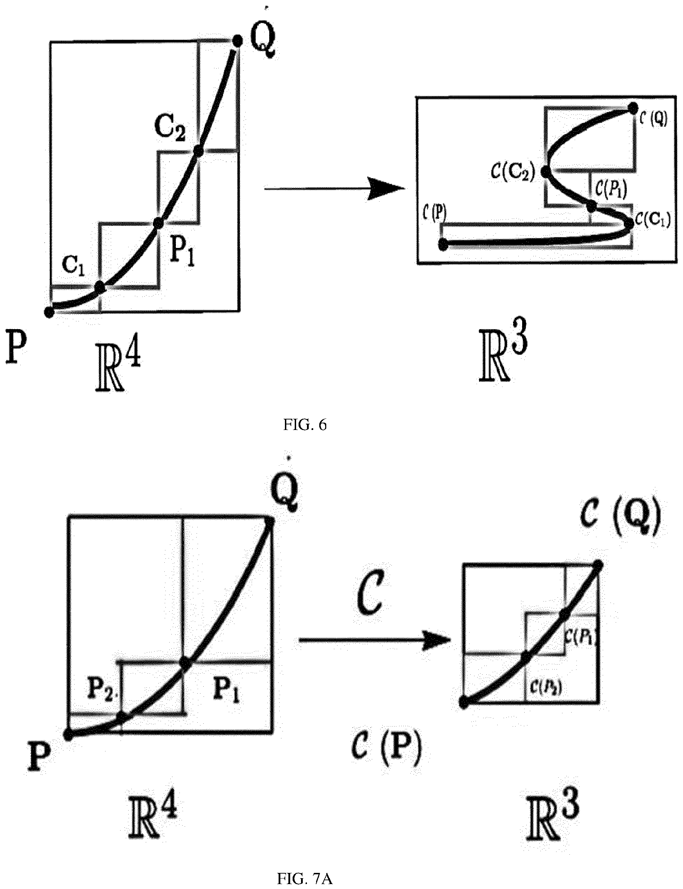

In order to provide a clearer explanation of step S102 in embodiments of the present disclosure, as shown in FIG. 2A to FIG. 7B, a four-dimensional box $\mathbb{B}$ in the four-dimensional parameter space and a three-dimensional box B in the three-dimensional parameter space are defined respectively. For the four-dimensional box $\mathbb{B} = [a_1, b_1] \times [a_2, b_2] \times [a_3, b_3] \times [a_4, b_4]$, the three-dimensional box B may be further expressed as follows:

$$B = \mathcal{C}(\mathbb{B}) = \mathcal{C}_1(\pi_1(\mathbb{B})) \cap \mathcal{C}_2(\pi_2(\mathbb{B}))$$

The first lemma condition is a predetermined condition for determining whether the corresponding curve segment in the four-dimensional parameter space is a strongly monotonic curve segment, which may meet the following:

Condition (1): Let P = ($p_1$, $p_2$, $p_3$, $p_4$), Q = ($q_1$, $q_2$, $q_3$, $q_4$) be two points on the curve $W$, for $i$ = 1,2,3,4, parameter $\varepsilon_i$ > 0 if $T_i(Q) = 0$, and $\varepsilon_i = 0$ in other cases. For example, $T_1(Q) = 0$, $\varepsilon_1 > 0$; $T_1(Q) \neq 0$, $\varepsilon_1 = 0$.

Condition (2): for all $i$ = 1,2,3,4, $0 \notin T_i\left(\mathbb{B}_{P,Q}\right)$ .

The condition (1) is a pre-condition for the condition (2). When both conditions are met, it may be determined that the four-dimensional parameter space box $\mathbb{B}_{P,Q}$ contains a unique strongly monotonic curve segment $\widehat{PQ}$. That is, the four-dimensional parametric curve $W$ is traced from the starting point P to the ending point Q with a fixed first step length, the curve segment $\widehat{PQ}$ that meets the condition (1) and the condition (2) may be decomposed as the first strongly monotonic curve segment. In this way, a plurality of first strongly monotonic curve segments may be obtained.

Therefore, in general, only when the condition (1) and the condition (2) of the first lemma condition are met simultaneously, the four-dimensional parametric curve in the corresponding four-dimensional parameter space box $\mathbb{B}_{P,Q}$ contains a unique strongly monotonic curve segment $\widehat{PQ}$ .

Specifically, the four-dimensional parametric curve $W$ is traced from a starting point P = ($p_1$, $p_2$, $p_3$, $p_4$) with a step length *len* = *l* to obtain an ending point Q = ($q_1$, $q_2$, $q_3$, $q_4$). If the box $\mathbb{B}_{P,Q}$ meets the condition (1) and the condition (2) of the first lemma condition, the decomposed curve segment $\widehat{PQ}$ is in the box $\mathbb{B}_{P,Q}$ and is strongly monotonic, so that a decomposition process of the first strongly monotonic curve segment $\widehat{PQ}$ on the four-dimensional parametric curve $W$ is completed.

However, if the curve segment $\widehat{PQ}$ does not meet the first lemma condition, it is required to repeatedly trace and decompose the four-dimensional parametric curve $W$, where the step strength for tracing needs to be adjusted.

A first cycle condition is a determination condition corresponding to the repeated tracing and decomposition of the four-dimensional parametric curve $W$, and the first cycle condition meets the following condition:

Condition (3): For i = 1,2,3,4, it is required to meet $0 \notin T_i\left(\mathbb{B}_{P,Q}\right)$ ; or for $i$ = 1,2,3,4, it is required to meet $T_j(P)T_j(Q)$ < 0, and $0 \notin T_i\left(\mathbb{B}_{P,Q}\right)$ for at least one $i$.

If the four-dimensional box $\mathbb{B}_{P,Q}$ corresponding to the four-dimensional parametric curve meets the first cycle condition, then for each i that meets $0 \in T_i\left(\mathbb{B}_{P,Q}\right)$ , a critical point may be calculated for system {$W$ = 0, $T_i$ = 0} by using a center of a plane $\mathbb{B}_{P,Q}^{q_i}$ as the starting point. If only one $i$ meets $0 \in T_i\left(\mathbb{B}_{P,Q}\right)$ , a critical point C may be determined. If each term obtains a point, a system { $W = 0$, $T_{j_1} = 0$, ..., $T_{j_k} = 0$} with more variables than equations may be considered, and if the same critical point may be found for different $j_t$(t = 1,2, ..., k) $\in$ {1,2,3,4}, a final critical point C is determined. The critical point C is used to decompose the curve segment $\widehat{PQ}$ that does not meet the condition (1) and the condition (2) of the first lemma condition.

Therefore, in step S 102, if the four-dimensional parametric curve in the four-dimensional space does not meet the first lemma condition, it is needed to check the critical point in the process of tracing and decomposition, and the four-dimensional parametric curve may be further decomposed into strongly monotonic curve segments by using the critical point in the four-dimensional parametric space corresponding to the first cycle condition, so that the problems of getting lost and cycling in traditional technologies may be effectively avoided.

Specifically, for the curve segment $\widehat{PQ}$ with strongly monotonic characteristic that does not meet the definition of the first lemma condition, (P, C) and (Q, C) may be tested by determining the critical point C on the curve segment $\widehat{PQ}$ . If both meet the second lemma condition, the curve segment $\widehat{PQ}$ may be further decomposed into two strongly monotonic curve segments $\widehat{PC}$ and $\widehat{CQ}$ , then the tracing may continue with the fixed step length $len = l$ by using the ending point Q as a new starting point.

The second lemma condition is a predetermined condition for determining the strong monotonicity of the curve segment $\widehat{PQ}$ by using the critical point determined based on the first cycle condition. The second lemma condition may meet the following conditions:

Condition (1): Let P = ($p_1$, $p_2$, $p_3$, $p_4$), Q = ($q_1$, $q_2$, $q_3$, $q_4$) be two points on the curve $W$, for i = 1,2,3,4, parameter $\varepsilon_i$ > 0 if $T_i(Q)$ = 0, and $\varepsilon_i$ = 0 in other cases.

Condition (4): $T_i(Q)$ = 0 for some $i$ = 1,2,3,4 , $T_j(P) \neq 0$ for all $j$ = 1,2,3,4 ; and Q' = ($q_1 + \varepsilon_1(q_1 - p_1)$, $q_2 + \varepsilon_2(q_2 - p_2)$, $q_3 + \varepsilon_3(q_3 - p_3)$, $q_1 + \varepsilon_4(q_4 - p_4)$).

The condition (4) is required to further meet the following:

(a) $0 \notin T_i\left(\mathbb{B}_{P,Q}\right)$ for some $i$ = 1,2,3,4.

(b) For i = 1,2,3,4, $0 \notin T_i\left(\mathbb{B}_{P,Q'}^{q_i}\right)$ if $T_i(Q) \neq 0$, where $\mathbb{B}_{P,Q'}^{q_i}$ represents a plane of which an i$^{th}$ coordinate is $q_i$ in $\mathbb{B}_{P,Q'}$ .

(c) For $i$ = 1,2,3,4 , if $T_i(Q)$ = 0 , there exists $j$ = 1,2,3 that meets $0 \notin \left(\frac{F_j}{F_4} - \frac{G_j}{G_4}\right)_{(s,t,u,v)\in\mathbb{B}_{P,Q'}^{q_i}}$

(d) For each $i$ = 1,2,3,4, if $0 \in T_i\left(\mathbb{B}_{P,Q'}\right)$ , $J(W, T_i)$ may be the Jacobian matrix of a function {$W$, $T_i$}, then $J(W,T_i)\left(\mathbb{B}_{P,Q'}\right)$ does not contain 0.

It should be noted that if the above test fails or it fails to find the same critical point, it is needed to halve the above-mentioned fixed step length, and re-trace the fourth-dimensional parametric curve from the initial predetermined starting point P on the four-dimensional parameter curve to complete the decomposition of the first strongly monotonic curve. These operations are repeatedly performed until the end. In this way, it is possible to effectively avoid the problems of getting lost and cycling that are prone to occur in traditional technologies, while ensuring a validity of the decomposition and tracing process.

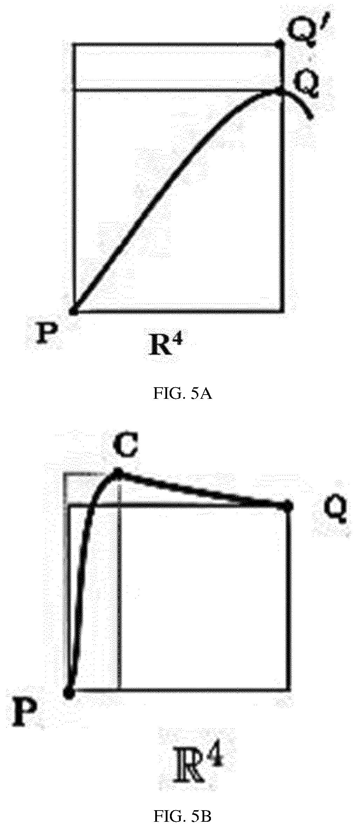

In other words, the process of processing data in embodiments of the present disclosure may be terminated because there are only a finite number of critical points in a curve segment, that is, if the box is small enough, there may be only one critical point in the box. Therefore, when the condition (d) involved in the second lemma condition is met, the unique critical point Q may be determined. If some planes containing point Q in the four-dimensional box $\mathbb{B}_{P,Q}$ are tangent to the curve segment at the point Q, the box may be thickened until the planes do not intersect with the curve segment, so that the condition (c) is met. Since there are no tangent points, the condition (b) may be met when the box is small enough. Specifically, FIG. 5A shows a schematic diagram of thickening the four-dimensional box, and FIG. 5B shows a schematic diagram of thickening the box and decomposing the four-dimensional parametric curve into two strongly monotonic curve segments $\widehat{PC}$ and $\widehat{CQ}$ at the critical point C, where C is the critical point.

Therefore, if the step S102 is continuously performed according to the first lemma condition and the second lemma condition based on the first cycle condition, it may be ensured that the four-dimensional parametric curve may be decomposed into a plurality of first strongly monotonic curve segments, so that there will be no problems of getting lost and cycling during the curve tracing and decomposition process.

As shown in FIG. 1 and FIG. 6 to FIG. 7B, according to embodiments of the present disclosure, the step S103 of decomposing each of the plurality of first strongly monotonic curve segment data into at least one second strongly monotonic curve segment data may include:

each first strongly monotonic curve segment data is decomposed into at least one second strongly monotonic curve segment in the corresponding three-dimensional model space according to a third lemma condition.

The third lemma condition is related to the three-dimensional tangent vector data corresponding to the three-dimensional parametric curve data in the three-dimensional model space corresponding to the four-dimensional parametric curve.

The step S103 is intended to further decompose the first strongly monotonic curve segment that is decomposed from the four-dimensional parametric curve W, and the decomposed curve segment is a strongly monotonic curve segment that is strongly monotonic in the corresponding three-dimensional model space, i.e., the second strongly monotonic curve segment.

The third lemma condition is a predetermined condition for determining whether the curve segment further decomposed from the first strongly monotonic curve segment is also strongly monotonic in the three-dimensional model space. The third lemma condition may meet the following conditions:

Condition (5): Let $P = (p_1, p_2, p_3, p_4)$, $Q = (q_1, q_2, q_3, q_4)$ be two points on the four-dimensional parametric curve $W$, the four-dimensional box $\mathbb{B}_{P,Q}$ contains only one unique strongly monotonic curve segment $\widehat{PQ}$, and if the following condition (6) or condition (7) is met, the three-dimensional box $B_{\mathcal{C}(P),\mathcal{C}(Q)}$ corresponding to the strongly monotonic curve segment $\widehat{PQ}$ contains only one strongly monotonic curve segment $\widehat{\mathcal{C}(P)\mathcal{C}(Q)}$.

Condition (6): $0 \notin T_i\left(\mathbb{B}_{P,Q}\right)$ for all $i = 5,6,7$.

Condition (7): $T_i(P) \neq 0$ for all $i = 5,6,7$, and at least one i(= 5,6,7) meets $T_i(Q) \neq 0$. For each $i = 5,6,7$, if $T_i(Q) \neq 0$, then $0 \notin T_i\left(\mathbb{B}_{P,Q}\right)$ and $0 \det\left(J(W, T_i)\left(\mathbb{B}_{P,Q}\right)\right)$, where $J(W, T_i)\left(\mathbb{B}_{P,Q}\right)$ is the Jacobian matrix of system $\{W, T_i\}$.

The condition (5) is a pre-condition for the condition (6) or the condition (7), which means that when both the condition (5) and the condition (6) are met or both the condition (5) and the condition (7) are met, the third lemma condition is met, and the three-dimensional box $B_{\mathcal{C}(P),\mathcal{C}(Q)}$ of the corresponding strongly monotonic curve segment $\widehat{PQ}$ contains only one strongly monotonic curve segment $\widehat{\mathcal{C}(P)\mathcal{C}(Q)}$.

Therefore, similar to the above-mentioned tracing and decomposition process for the four-dimensional parametric curve, each first strongly monotonic curve segment in the four-dimensional parameter space may be further decomposed into second strongly monotonic curve segments in the corresponding three-dimensional parameter space, which may also meet the requirement of achieving a second decomposition process in a case of finite steps, without traditional problems of cycling or getting lost.

Therefore, by connecting the ending points of these second strongly monotonic curve segments, a high reliability and robustness may be ensured for the approximation of the intersection line, which may avoid problems of getting lost and cycling, and ensure a correct approximation of the knot structure.

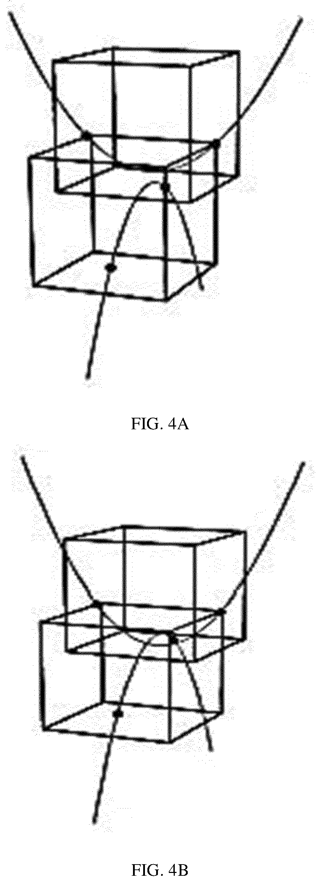

In the above-mentioned step S103, by checking the critical point in the three-dimensional model space, the strongly monotonic curve segment of the four-dimensional parametric curve $W$ is further decomposed into curve segments in the corresponding three-dimensional model space, and those curve segments are also strongly monotonic curve segments with strong monotonicity, so that a correct knot structure of the curve may be ensured, and the topological correctness of the intersection curves may be ensured. As shown in FIG. 6, the strongly monotonic curve segment in the four-dimensional parameter space is further decomposed into curve segments in the corresponding three-dimensional model space, and those curve segments are also strongly monotonic curve segments. After completing the corresponding decomposition, the boxes in the three-dimensional parametric curve may not intersect internally, thus effectively ensuring the correctness of the knot structure. Furthermore, as shown in FIG. 4A and FIG. 4B, the knot structure in the three-dimensional model space may not be correct if the boxes in the three-dimensional model space mapped from the boxes in the four-dimensional parameter space intersect with each other.

Each strongly monotonic curve segment corresponding to the three-dimensional model space may be decomposed into two adjacent points P and Q, and a point distance between two points corresponding to the points P and Q in the three-dimensional model space meets a requirement that the point distance is less than $2\xi$. In other words, for the intersection error $\xi$ to be controlled, during the tracing process, the distance between two points in the three-dimensional model space corresponding to two selected adjacent points of each second strongly monotonic curve segment needs to be less than $2\xi$, that is, two points $\mathcal{C}(\mathrm{P})$ and $\mathcal{C}(\mathrm{Q})$ in the three-dimensional model space corresponding to two adjacent points P and Q on a second strongly monotonic curve segment meet: $\|\mathcal{C}(\mathrm{P})\mathcal{C}(\mathrm{Q})\| < 2\xi$ . $\|\mathcal{C}(\mathrm{P})\mathcal{C}(\mathrm{Q})\|$ represents the distance between two points $\mathcal{C}(\mathrm{P})$ and $\mathcal{C}(\mathrm{Q})$ in the three-dimensional model space.

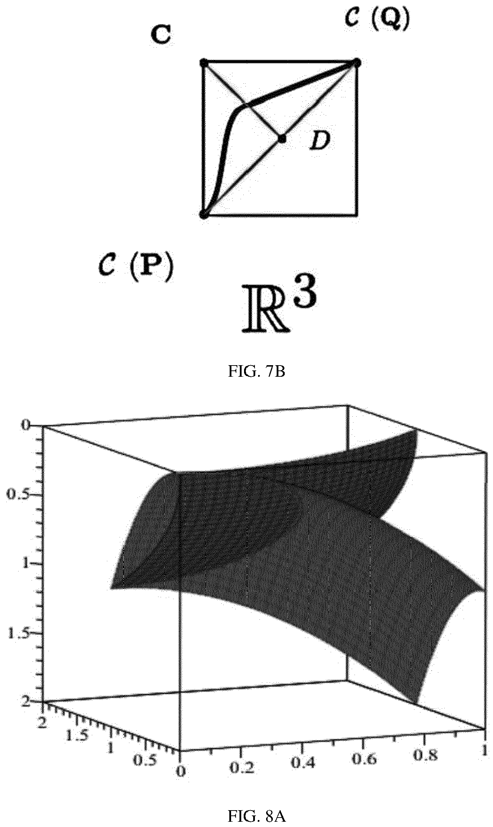

Specifically, as shown in FIG. 7A, an accuracy of the approximation error is controlled by using the distance between two adjacent points, and as shown in FIG. 7B, the accuracy is controlled using the distance between strongly monotonic curve segments in the three-dimensional model space, and the distance between the points C and D may be understood as the above-mentioned error. Therefore, the error may be controlled by controlling the distance between two endpoints.

In summary, the present disclosure proposes a method for processing data to find an intersection between rational parametric surfaces, so as to efficiently calculate the intersection between rational parametric surfaces based on tracing strongly monotonic curve segment. In the step of finding the parametric curve, the parametric curve is viewed in the four-dimensional space, and when the four-dimensional curve is traced from the starting point to the ending point and decomposed into strongly monotonic curve segments, the critical point of the parametric curve is found and the parametric curve is decomposed into strongly monotonic curve segments, which may ensure that there will be no problems of getting lost and cycling in the process of tracing the parametric curve. By checking the critical point in the model space, the corresponding decomposed strongly monotonic curve segment may be further decomposed into strongly monotonic curve segments by using the critical point, and those strongly monotonic curve segments meet the condition that the corresponding curve segments in the three-dimensional model space are also strongly monotonic. In this way, it may be ensured that there will be no problems of getting lost and cycling when tracing the curve in the three-dimensional model space, and the correctness of the knot structure may also be ensured, so as to maintain the topological accuracy. Finally, the control of the distance between adjacent points may be used to control the accuracy of finding the intersection.

The rational parametric surface of embodiments of the present disclosure may adapt to various situations. As shown in FIG. 8A, a specific embodiment, which is a first embodiment, is provided, in which two rational parametric surfaces may meet the following equations:

$$R_1 = [s, s^2 + t^2, t],$$

$$R_2 = [u, v, u^2 + v^2], s, t, u, v \in [0,1].$$

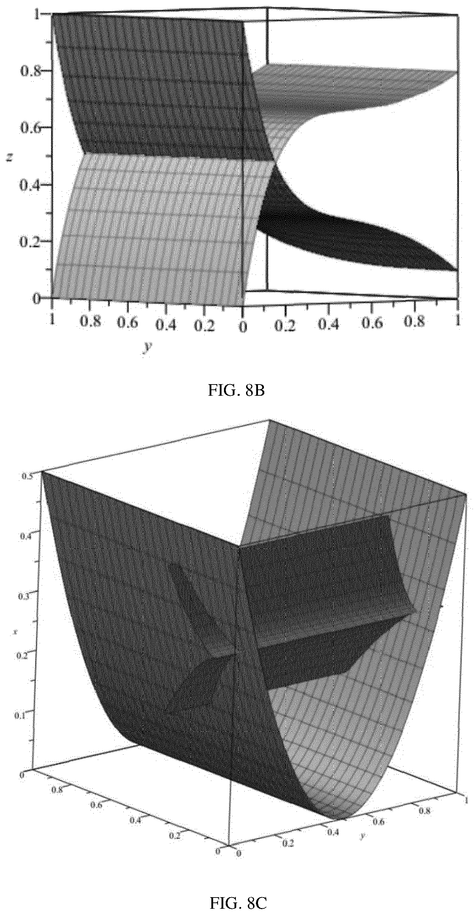

As shown in FIG. 8B, another specific embodiment, which is a second embodiment, is provided, in which two rational parametric surfaces may meet the following equations:

$$R_1 = \left[\frac{t(2t^2+3)}{5}, -\frac{s(2s+3)(s-3)}{10}, 1 - \frac{12t^3}{5} + \frac{9t^2}{2} - 3t + \frac{s^3t^3}{10}\right],$$

$$R_2 = \left[\frac{v(2v^2+3)}{5}, -\frac{u(2u+3)(u-3)}{10}, \frac{v(23v^2-45v+30)}{10}\right], s, t, u, v \in [0,1].$$

As shown in FIG. 8C, another specific embodiment, which is a third embodiment, is provided, in which two rational parametric surfaces may meet the following equations:

$$R_1 = [2t^2 - 2t + 0.5, t, s],$$

$$R_2 = [u^3 - 1.5u^2 + 0.75u + 0.175, v, u^2 - 10u + 0.35], s, t, u, v \in [0,1]$$

The present disclosure proposes a method for processing data to find an intersection between rational parametric surfaces, so as to efficiently calculate the intersection between rational parametric surfaces based on tracing strongly monotonic curve segment. In a practical application process, it is difficult to achieve stable and robust algorithms and maintain good efficiency of finding the intersection. In addition, it is also difficult to maintain the knot structure in the curve and solve the problems of cycling and getting lost during the tracing process. The stepwise method is commonly used, but it is difficult to solve the topology error caused by the jumping problem and to solve the problem of non-termination of algorithm caused by the cycling problem. The combination of the subdivision algorithm and the interval algorithm may solve some problems, but the computational efficiency is very low and the problem of knot structure may not be solved. Different from the related art mentioned above, in the first stage of embodiments of the present disclosure, the problems of getting lost and cycling are effectively solved by decomposing the four-dimensional parametric curve into strongly monotonic curve segments. However, the strongly monotonic curve segments decomposed in the four-dimensional parameter space may not maintain the knot structure in the three-dimensional space. In the second stage, the strongly monotonic curve segment decomposed from the four-dimensional parametric curve is further decomposed into curve segments in the three-dimensional parameter space corresponding to the curve segment, and those curve segments maintain the strong monotonicity in the three-dimensional space, thereby ensuring the correctness of the knot structure of the curve. In the third stage, the accuracy may be controlled by controlling the distance between adjacent points, which is also very important in practice.

Therefore, the above method for processing data to find the intersection between rational parametric surfaces in embodiments of the present disclosure may be implemented to accurately and efficiently find the intersection between rational parametric surfaces with limited times of steps, and also ensure the correct knot structure, so that the method of processing data may be effectively used in a representation of a complex object, a finite element discretization, a computer animation, a facial recognition and other aspects, and in CAD/CAM and geometric modeling fields, and has a high practical application value.

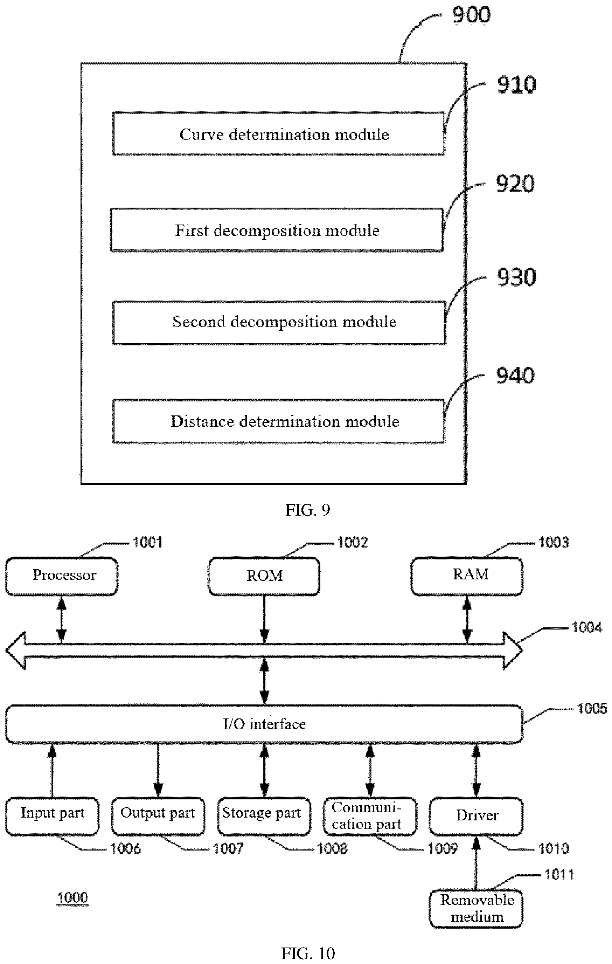

As shown in FIG. 9, in another aspect of the present disclosure, an apparatus for processing data to find an intersection between rational parametric surfaces is provided, which includes a curve determination module 910, a first decomposition module 920, a second decomposition module 930, and a distance determination module 940.

The curve determination module 910 is used to determine four-dimensional parametric curve data. In an embodiment, the curve determination module 910 may be used to perform the operation S101 described above, which will not be repeated here.

The first decomposition module 920 is used to decompose the four-dimensional parametric curve data into a plurality of first strongly monotonic curve segment data. In an embodiment, the first decomposition module 910 may be used to perform the operation S102 described above, which will not be repeated here.

The second decomposition module 930 is used to decompose each of the plurality of first strongly monotonic curve segment data into at least one second strongly monotonic curve segment data. In an embodiment, the second decomposition module 930 may be used to perform the operation S103 described above, which will not be repeated here.

The distance determination module 940 is used to determine a point distance between two adjacent points of each of the at least one second strongly monotonic curve segment data in a corresponding three-dimensional model space, so as to find the intersection between rational parametric surfaces. In an embodiment, the distance determination module 940 may be used to perform the operation S104 described above, which will not be repeated here.

According to embodiments of the present disclosure, any number of the curve determination module 910, the first decomposition module 920, the second decomposition module 930 and the distance determination module 940 may be combined into one module for implementation, or any one of the modules may be split into a plurality of modules. Alternatively, at least part of the functions of one or more of these modules may be combined with at least part of the functions of other modules and implemented in one module. According to embodiments of the present disclosure, at least one of the curve determination module 910, the first decomposition module 920, the second decomposition module 930 and the distance determination module 940 may be implemented at least partially as a hardware circuit, such as a field programmable gate array (FPGA), a programmable logic array (PLA), a system on a chip, a system on a substrate, a system on a package, an application specific integrated circuit (ASIC), or may be implemented by hardware or firmware in any other rational manner of integrating or encapsulating the circuit, or may be implemented by any one of the three implementation modes of software, hardware and firmware or an appropriate combination thereof. Alternatively, at least one of the curve determination module 910, the first decomposition module 920, the second decomposition module 930 and the distance determination module 940 may be at least partially implemented as a computer program module that may perform the corresponding functions when executed.

It should be noted that FIG. 9 is just an example of an apparatus 900 for processing data to find an intersection between rational parametric surfaces that may be applied to embodiments of the present disclosure, so as to help those skilled in the art understand the technical content of the present disclosure. However, it does not mean that embodiments of the present disclosure may not be applied to other devices, systems, environments, or scenarios. In addition, it should be further explained that embodiments of the apparatus for processing data to find the intersection between rational parametric surfaces are similar to embodiments of the method for processing data to find the intersection between rational parametric surfaces, and the technical effects achieved are also similar, will not be described in detail here.

FIG. 10 schematically shows a block diagram of an electronic device suitable for implementing a method for processing data to find an intersection between rational parametric surfaces according to embodiments of the present disclosure.

As shown in FIG. 10, the electronic device 1000 according to embodiments of the present disclosure includes a processor 1001 which may perform various appropriate actions and processes according to a program stored in a read only memory (ROM) 1002 or a program loaded from a storage portion 1008 into a random access memory (RAM) 1003. The processor 1001 may include, for example, a general-purpose microprocessor (for example, CPU), an instruction set processor and/or a related chipset and/or a special-purpose microprocessor (for example, an application specific integrated circuit (ASIC)), and the like. The processor 1001 may further include an on-board memory for caching purposes. The processor 1001 may include a single processing unit or a plurality of processing units for performing different actions of the method flow according to embodiments of the present disclosure.

Various programs and data required for the operation of the electronic device 1000 are stored in the RAM 1003. The processor 1001, the ROM 1002 and the RAM 1003 are connected to each other through a bus 1004. The processor 1001 performs various operations of the method flow according to embodiments of the present disclosure by executing the programs in the ROM 1002 and/or the RAM 1003. It should be noted that the program may also be stored in one or more memories other than the ROM 1002 and the RAM 1003. The processor 1001 may also perform various operations of the method flow according to embodiments of the present disclosure by executing the programs stored in the one or more memories.

According to embodiments of the present disclosure, the electronic device 1000 may further include an input/output (I/O) interface 1005 which is also connected to the bus 1004. The electronic device 1000 may further include one or more of the following components connected to the I/O interface 1005: an input part 1006 including a keyboard, a mouse, etc.; an output part 1007 including a cathode ray tube (CRT), a liquid crystal display (LCD), etc. and a speaker, etc.; a storage part 1008 including a hard disk, etc.; and a communication part 1009 including a network interface card such as a LAN card, a modem, and the like. The communication part 1009 performs communication processing via a network such as the Internet. A driver 1010 is also connected to the I/O interface 1005 as required. A removable medium 1011, such as a magnetic disk, an optical disk, a magneto-optical disk, a semiconductor memory, and the like, is installed on the driver 1010 as required, so that the computer program read therefrom is installed into the storage part 1008.

The present disclosure further provides a computer-readable storage medium, which may be contained in the apparatus/device/system described in the above embodiments; or exist alone without being assembled into the apparatus/device/system. The above-mentioned computer-readable storage medium carries one or more programs that perform the methods according to embodiments of the present disclosure when being executed.

According to embodiments of the present disclosure, the computer-readable storage medium may be a non-transitory computer-readable storage medium, for example, may include but not limited to: a portable computer disk, a hard disk, a random access memory (RAM), a read-only memory (ROM), an erasable programmable read-only memory (EPROM) or flash memory, a portable compact disk read-only memory (CD-ROM), an optical storage device, a magnetic storage device, or any suitable combination of the above. In the present disclosure, the computer-readable storage medium may be any tangible medium that contains or stores programs that may be used by or in combination with an instruction execution system, apparatus or device. For example, according to embodiments of the present disclosure, the computer-readable storage medium may include the above-mentioned ROM 1002 and/or RAM 1003 and/or one or more memories other than the ROM 1002 and RAM 1003.

Embodiments of the present disclosure further include a computer program product, which contains a computer program. The computer program contains program code for performing the method provided by embodiments of the present disclosure. When the computer program product runs in a computer system, the program code is used to cause the computer system to implement the method provided in embodiments of the present disclosure.

When the computer program is executed by the processor 1001, the above-mentioned functions defined in the system/device of embodiments of the present disclosure are performed. According to embodiments of the present disclosure, the above-described systems, devices, modules, units, etc. may be implemented by computer program modules.

In an embodiment, the computer program may rely on a tangible storage medium such as an optical storage device and a magnetic storage device. In another embodiment, the computer program may also be transmitted and distributed in the form of signals on a network medium, downloaded and installed through the communication part 1009, and/or installed from the removable medium 1011. The program code contained in the computer program may be transmitted by any suitable medium, including but not limited to a wireless one, a wired one, or any suitable combination of the above.

In such embodiments, the computer program may be downloaded and installed from the network through the communication part 1009, and/or installed from the removable medium 1011. When the computer program is executed by the processor 1001, the above-mentioned functions defined in the system of embodiments of the present disclosure are performed. According to embodiments of the present disclosure, the above-described systems, apparatuses, devices, modules, units, etc. may be implemented by computer program modules.

According to embodiments of the present disclosure, the program code for executing the computer programs provided by embodiments of the present disclosure may be written in any combination of one or more programming languages. In particular, these computing programs may be implemented using high-level procedures and/or object-oriented programming languages, and/or assembly/machine languages. Programming languages include, but are not limited to, Java, C++, Python, "C" language or similar programming languages. The program code may be completely executed on the user computing apparatus, partially executed on the user device, partially executed on the remote computing apparatus, or completely executed on the remote computing apparatus or server. In a case of involving a remote computing apparatus, the remote computing apparatus may be connected to a user computing apparatus through any kind of network, including a local area network (LAN) or a wide area networks (WAN), or may be connected to an external computing apparatus (e.g., through the Internet using an Internet service provider).

So far, a detailed description of embodiments of the present disclosure has been provided with reference to the accompanying drawings.

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, a program segment, or a code, which part includes one or more executable instructions for implementing the specified logical function. It should be further noted that, in some alternative implementations, the functions noted in the blocks may also occur in a different order from that noted in the accompanying drawings. For example, two blocks shown in succession may actually be executed substantially in parallel, or they may sometimes be executed in a reverse order, depending on the functions involved. It should be further noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

Although the present disclosure has been shown and described with reference to specific exemplary embodiments of the present disclosure, those skilled in the art should understand that without departing from the spirit and scope of the present disclosure defined by the appended claims and their equivalents, various modifications in form and details may be made to the present disclosure. Therefore, the scope of the present disclosure should not be limited to the embodiments described above, but should be defined by the appended claims and their equivalents.

The specific embodiments described above further describe the objectives, technical solutions and advantages of the present disclosure in further detail. It should be understood that the above descriptions are only specific embodiments of the present disclosure and are not intended to limit the present disclosure. Any modifications, equivalent substitutions, improvements, etc., made within the spirit and scope of the present disclosure shall be included within the scope of protection of the present disclosure.

**Claims**

1. A method for processing data to find an intersection between rational parametric surfaces, comprising:

   determining four-dimensional parametric curve data (S101);
   decomposing the four-dimensional parametric curve data into a plurality of first strongly monotonic curve segment data (S102);
   decomposing each of the plurality of first strongly monotonic curve segment data into at least one second strongly monotonic curve segment data (S103); and
   determining a point distance between two adjacent points of each of the at least one second strongly monotonic curve segment data in a corresponding three-dimensional model space, so as to find the intersection between rational parametric surfaces (S 104).

2. The method of claim 1, wherein the determining four-dimensional parametric curve data comprises:
   determining the four-dimensional parametric curve data based on received first rational parametric surface data and second rational parametric surface data.

3. The method of claim 1, further comprising: before decomposing the four-dimensional parametric curve data into a plurality of first strongly monotonic curve segment data,
   determining four-dimensional tangent vector data and three-dimensional tangent vector data, wherein the four-dimensional tangent vector data corresponds to the four-dimensional parametric curve data, and the three-dimensional tangent vector data corresponds to three-dimensional parametric curve data formed by mapping the four-dimensional parametric curve data into the three-dimensional model space.

4. The method of claim 1, wherein the decomposing the four-dimensional parametric curve data into a plurality of first strongly monotonic curve segment data comprises:
   tracing the four-dimensional parametric curve data from a predetermined starting point corresponding to the four-dimensional parametric curve data, and in response to a decomposed curve segment meeting a predetermined first lemma condition, determining the decomposed curve segment as one of the plurality of first strongly monotonic curve segment data, wherein the decomposed curve segment corresponds to an ending point meeting a first predetermined step length with the predetermined starting point.

5. The method of claim 4, wherein the decomposing the four-dimensional parametric curve data into a plurality of first strongly monotonic curve segment data further comprises:

   tracing the four-dimensional parametric curve data from a predetermined starting point corresponding to the four-dimensional parametric curve data, and in response to a decomposed curve segment meeting a first predetermined cycle condition, determining a critical point of the decomposed curve segment, wherein the decomposed curve segment corresponds to an ending point meeting the first predetermined step length with the predetermined starting point; and
   determining, in response to a first decomposed curve segment and a second decomposed curve segment meeting a second lemma condition, the first decomposed curve segment and the second decomposed curve segment as two of the plurality of first strongly monotonic curve segment data, and continuing to trace the four-dimensional parametric curve data by using the ending point of the decomposed curve segment as a starting point, wherein the first decomposed curve segment corresponds to the predetermined starting point of the decomposed curve segment and the critical point, and the second decomposed curve segment corresponds to the critical point and the ending point of the decomposed curve segment,
   wherein the first lemma condition and the second lemma condition are related to four-dimensional tangent vector data corresponding to the four-dimensional parametric curve.

6. The method of claim 5, wherein the decomposing the four-dimensional parametric curve data into a plurality of first strongly monotonic curve segment data further comprises:

   re-tracing the four-dimensional parametric curve data with a second predetermined step length from the predetermined starting point, in response to the first decomposed curve segment and the second decomposed curve segment not meeting the second lemma condition or in response to failing to determine the critical point, wherein the second predetermined step length is half of the first predetermined step length.

7. The method of claim 1, wherein the decomposing each of the plurality of first strongly monotonic curve segment data into at least one second strongly monotonic curve segment data comprises:

decomposing, according to a third lemma condition, each of the plurality of first strongly monotonic curve segment data into at least one second strongly monotonic curve segment data in a corresponding three-dimensional model space,

wherein the third lemma condition is related to three-dimensional tangent vector data corresponding to three-dimensional parametric curve data in a three-dimensional model space corresponding to the four-dimensional parametric curve.

8. An apparatus for processing data to find an intersection between rational parametric surfaces, comprising:

a curve determination module (910) configured to determine four-dimensional parametric curve data;

a first decomposition module (920) configured to decompose the four-dimensional parametric curve data into a plurality of first strongly monotonic curve segment data;

a second decomposition module (930) configured to decompose each of the plurality of first strongly monotonic curve segment data into at least one second strongly monotonic curve segment data; and

a distance determination module (940) configured to determine a point distance between two adjacent points of each of the at least one second strongly monotonic curve segment data in a corresponding three-dimensional model space, so as to find the intersection between rational parametric surfaces.

9. An electronic device, comprising:

one or more processors (1001); and

a memory for storing one or more programs, wherein the one or more programs, when executed by the one or more processors, are configured to cause the one or more processors to implement the method of any one of claims 1 to 7.

10. A computer-readable storage medium having computer-executable instructions, wherein the instructions when executed are configured to implement the method of any one of claims 1 to 7.

S101

Four-dimensional parametric curve data is determined

S102

The four-dimensional parametric curve data is decomposed into a plurality of first strongly monotonic curve segment data

S103

Each of the plurality of first strongly monotonic curve segment data is decomposed into at least one second strongly monotonic curve segment data

S104

A point distance between two adjacent points of each of the at least one second strongly monotonic curve segment data in a corresponding three-dimensional model space is determined

FIG. 1

FIG. 2A

FIG. 2B

FIG. 3

FIG. 4A

FIG. 4B

FIG. 5A

FIG. 5B

FIG. 6

FIG. 7A

FIG. 7B

FIG. 8A

FIG. 8B

FIG. 8C

900

910 Curve determination module

920 First decomposition module

930 Second decomposition module

940 Distance determination module

FIG. 9

1001 Processor

1002 ROM

1003 RAM

1004

1005 I/O interface

Input part — 1006

Output part — 1007

Storage part — 1008

Communication part — 1009

Driver — 1010

1011 Removable medium

1000

FIG. 10

| | Europäisches Patentamt European Patent Office Office européen des brevets | **EUROPEAN SEARCH REPORT** | **Application Number** EP 23 18 8181 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 112 541 158 A (ACAD OF MATHEMATICS AND SYSTEMS SCIENCE CHINESE ACAD OF SCIENCES) 23 March 2021 (2021-03-23) * abstract * ----- | 1-10 | INV. G06T17/30 |
| A | PARK YOUNGJIN ET AL: "Surface-Surface-Intersection Computation Using a Bounding Volume Hierarchy with Osculating Toroidal Patches in the Leaf Nodes", COMPUTER-AIDED DESIGN, ELSEVIER PUBLISHERS BV., BARKING, GB, vol. 127, 8 May 2020 (2020-05-08), XP086238076, ISSN: 0010-4485, DOI: 10.1016/J.CAD.2020.102866 [retrieved on 2020-05-08] * abstract * * sections 3, 4 * ----- | 1-10 | |
| A | YOUNGJIN PARK: "Self-intersection computation for freeform surfaces based on a regional representation scheme for miter points", COMPUTER AIDED GEOMETRIC DESIGN, vol. 86, March 2021 (2021-03), pages 1-13, XP093158597, AMSTERDAM, NL ISSN: 0167-8396, DOI: 10.1016/j.cagd.2021.101979 * abstract * * sections 3, 4 * ----- -/-- | 1-10 | TECHNICAL FIELDS SEARCHED (IPC) G06T |

The present search report has been drawn up for all claims

| Place of search | Date of completion of the search | Examiner |
|---|---|---|
| Berlin | 2 May 2024 | Bouchaâla, Nicolas |

EPO FORM 1503 03.82 (P04C01)

Europäisches
Patentamt

European
Patent Office

Office européen
des brevets

## EUROPEAN SEARCH REPORT

Application Number

EP 23 18 8181

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEYKIN A ET AL: "Newton's method with deflation for isolated singularities of polynomial systems", THEORETICAL COMPUTER SCIENCE, ELSEVIER, AMSTERDAM, NL, vol. 359, no. 1-3, 14 August 2006 (2006-08-14), pages 111-122, XP027887237, ISSN: 0304-3975 [retrieved on 2006-08-14] * abstract * | 1-10 | |

-----

TECHNICAL FIELDS
SEARCHED      (IPC)

The present search report has been drawn up for all claims

| Place of search | Date of completion of the search | Examiner |
|---|---|---|
| Berlin | 2 May 2024 | Bouchaâla, Nicolas |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...............................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 23 18 8181

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | Publication date | Patent family member(s) | Publication date |
|---|---|---|---|
| CN 112541158 A | 23-03-2021 | NONE | |

For more details about this annex : see Official Journal of the European Patent Office, No. 12/82